# DEMANDE DE BREVET EUROPEEN

(11) **EP 4 209 804 A1**
(43) Date de publication de la demande: **12.07.2023**
(21) Numéro de dépôt: 22217239.7
(22) Date de dépôt: 29.12.2022
(51) Int. Cl.: G01S 7/4863, G01S 7/4865, H02M 3/156, G01S 17/894

(54) **CAPTEUR DE LUMIERE**

(30) Priorité: 07.01.2022 FR 2200116
(71) Demandeur: STMicroelectronics (ALPS) SAS, 38000 Grenoble (FR)
(72) Inventeur: BRANCA, Xavier, 38360 SASSENAGE (FR)
(74) Mandataire: Cabinet Beaumont

(57) **Abrégé**

La présente description concerne un capteur de lumière (1) comprenant une puce de circuit intégré (100) et un convertisseur DC-DC élévateur (106). La puce (100) comprend une matrice de pixels (102, 104) comportant chacun au moins une SPAD. Le convertisseur (106) délivre aux SPADs (200) un potentiel de polarisation (VHV) apte à placer les SPADs en mode Geiger. Le convertisseur (106) comprend une inductance (110), un premier interrupteur (112), un deuxième interrupteur (114) et un circuit (CTRL) commandant des commutations du premier interrupteur (112). L'inductance (110) et les premier et deuxième interrupteurs (112, 114) sont disposés à l'extérieur de la puce (100) alors que le circuit de commande (CTRL) appartient à la puce (100).

## Description

### Domaine technique

La présente description concerne de façon générale les circuits électroniques, et, plus particulièrement, les capteurs de lumière, par exemple les capteurs de temps de vol.

### Technique antérieure

Les capteurs de lumière comprenant des diodes à avalanche à photon unique (SPAD de l'anglais "Single Photon Avalanche Diode") sont connus. De tels capteurs, par exemple des capteurs de temps de vol, comprennent une matrice de pixels où chaque pixel de la matrice comprend au moins une SPAD et est par exemple appelé pixel SPAD ou pixel à diode à avalanche à photon unique. Cette matrice de pixels est mise en oeuvre dans et sur une puce de circuit intégré, la puce étant mise en oeuvre à partir d'une couche semiconductrice. D'autres circuits du capteur, par exemple des circuits de commande des pixels et/ou des circuits de lecture des pixels, sont généralement mis en oeuvre dans la même puce de circuit intégré que la matrice de pixel.

Comme cela est bien connu de la personne du métier, pour détecter un photon unique, une SPAD doit d'abord être polarisée par un potentiel supérieur à sa tension de claquage ("breakdown voltage" en anglais). Ce potentiel de polarisation est déterminé de sorte que le champ électrique dans la jonction PN de la diode soit assez élevé pour que, lorsqu'un photon est reçu par la SPAD et entraîne la génération d'un porteur de charge, l'injection de ce porteur de charge dans la zone de déplétion de la SPAD déclenche un phénomène d'avalanche dans la SPAD. Ce mode de fonctionnement d'une diode est appelé mode Geiger dans la littérature.

Il existe diverses solutions pour générer ce potentiel de polarisation et le fournir aux SPAD de la matrice de pixels du capteur. Toutefois, ces solutions connues présentent toutes des inconvénients.

### Résumé de l'invention

Il existe un besoin d'un capteur de lumière comprenant une puce de circuits intégrés, la puce comprenant une matrice de pixels à SPAD, dans lequel la génération du potentiel de polarisation des SPADs au-dessus de leur tension de claquage résout au moins certains des inconvénients des capteurs de lumière connus.

Un mode de réalisation pallie tout ou partie des inconvénients des capteurs de lumière connus, par exemple des capteurs de lumière connus comprenant une matrice de pixels à SPAD.

Un mode de réalisation prévoit un capteur de lumière comprenant une puce de circuit intégré et un convertisseur DC-DC élévateur, dans lequel :
la puce de circuit intégré comprend une matrice de pixels, chaque pixel comportant au moins une diode à avalanche à photon unique ;
le convertisseur est configuré pour délivrer un potentiel de polarisation aux diodes des pixels, le potentiel de polarisation étant apte à placer lesdites diodes en mode Geiger ;
et le convertisseur comprend :
   - une inductance couplant un noeud configuré pour recevoir un premier potentiel d'alimentation à un noeud intermédiaire ;
   - un premier interrupteur couplant le noeud intermédiaire à un potentiel de référence ;
   - un deuxième interrupteur couplant le noeud intermédiaire à un noeud de sortie du convertisseur, le noeud de sortie étant configuré pour délivrer ledit potentiel de polarisation ; et
   - un circuit de commande configuré pour commander des commutations du premier interrupteur,
l'inductance, le premier interrupteur et le deuxième interrupteur du convertisseur étant disposés à l'extérieur de la puce de circuit intégré et le circuit de commande appartenant à ladite puce de circuit intégré.

Selon un mode de réalisation, le deuxième interrupteur est une diode.

Selon un mode de réalisation, le convertisseur comprend en outre une première capacité couplant le noeud de sortie au potentiel de référence, la première capacité étant disposée à l'extérieur de la puce de circuit intégré.

Selon un mode de réalisation, le noeud de sortie du convertisseur est connecté à une borne d'entrée de la puce de circuit intégré.

Selon un mode de réalisation, la borne d'entrée de la puce de circuit intégré est couplée, de préférence connectée, à une entrée du circuit de commande.

Selon un mode de réalisation, la borne d'entrée de la puce est couplée à la matrice de pixels de sorte qu'un potentiel sur la borne d'entrée soit fourni à chaque diode à avalanche à photon unique de la matrice de pixels de la puce de circuit intégré.

Selon un mode de réalisation, le potentiel de polarisation a une valeur cible supérieure à 15 V, de préférence supérieure ou égale à 20 V.

Selon un mode de réalisation, le capteur est configuré pour mettre en oeuvre une fonction de capture de temps de vol.

Selon un mode de réalisation, une borne de commande du premier interrupteur du convertisseur est connectée à une borne de sortie de la puce de circuit intégré.

Selon un mode de réalisation, une sortie du circuit de commande est couplée, de préférence connectée, à la borne de sortie de la puce de circuit intégré.

Selon un mode de réalisation, le convertisseur comprend en outre une deuxième capacité couplant le noeud configuré pour recevoir le premier potentiel d'alimentation au potentiel de référence, la deuxième capacité étant disposée à l'extérieur de la puce de circuit intégré.

Selon un mode de réalisation, la puce de circuit intégré comprend une borne configurée pour recevoir le potentiel de référence.

Selon un mode de réalisation, le convertisseur comprend en outre une résistance connectée en série avec l'inductance, entre le noeud configuré pour recevoir le premier potentiel d'alimentation et le noeud intermédiaire, la résistance étant disposée à l'extérieur de la puce de circuit intégré et la puce comprenant deux bornes connectées chacune à une extrémité différente de la résistance et au circuit de commande.

Selon un mode de réalisation, le capteur comprend un substrat sur lequel sont montés la puce de circuit intégré et des composants du convertisseur qui sont disposés à l'extérieur de la puce de circuit intégré, le support comprenant des pistes conductrices configurées pour connecter entre eux la puce et les composants du convertisseur qui sont disposés à l'extérieur de la puce de circuit intégré. Les composant du convertisseur qui sont disposés à l'extérieur de la puce et qui sont montés sur le support comprennent, par exemple, les premier et deuxième interrupteurs et l'inductance.

Selon un mode de réalisation, le capteur comprend en outre :
- un boîtier de protection monté sur le support ; et
- au moins une source de lumière montée sur le support,
la puce, l'inductance du convertisseur, les premier et deuxième interrupteurs du convertisseur et ladite au moins une source de lumière étant encapsulés dans ledit boîtier, et le capteur formant un module prêt à l'emploi.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière schématique et au moins en partie sous la forme de blocs, un mode de réalisation d'un capteur de lumière ;
la figure 2 représente de manière schématique un exemple d'un pixel comprenant une diode à avalanche à photon unique ;
la figure 3 représente, de manière schématique et au moins en partie sous la forme de blocs, un exemple d'un circuit du capteur de la figure 1 ; et
la figure 4 représente, de manière schématique et au moins en partie sous la forme de blocs, une variante de réalisation du capteur de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers pixels SPAD connus n'ont pas été tous décrits, la présente description s'appliquant à tous ces pixels SPAD connus. De la même façon, les procédés de commande usuels du ou des interrupteurs de découpage d'un convertisseur élévateur à découpage ("Switched Mode Power Supply Boost Converter" ou "SMPS Boost Converter" en anglais) et les circuits de commande usuels mettant en oeuvre ces procédés de commande usuels n'ont pas tous été détaillés, la présente description s'appliquant à ces procédés de commande usuels et à ces circuits de commande usuels.

Dans la suite de la description, sauf indication contraire, chaque potentiel est, par exemple, référencé par rapport à un même potentiel de référence, par exemple la masse GND, et le potentiel d'un noeud a alors la même valeur que la tension prise entre ce noeud et un noeud au potentiel de référence.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

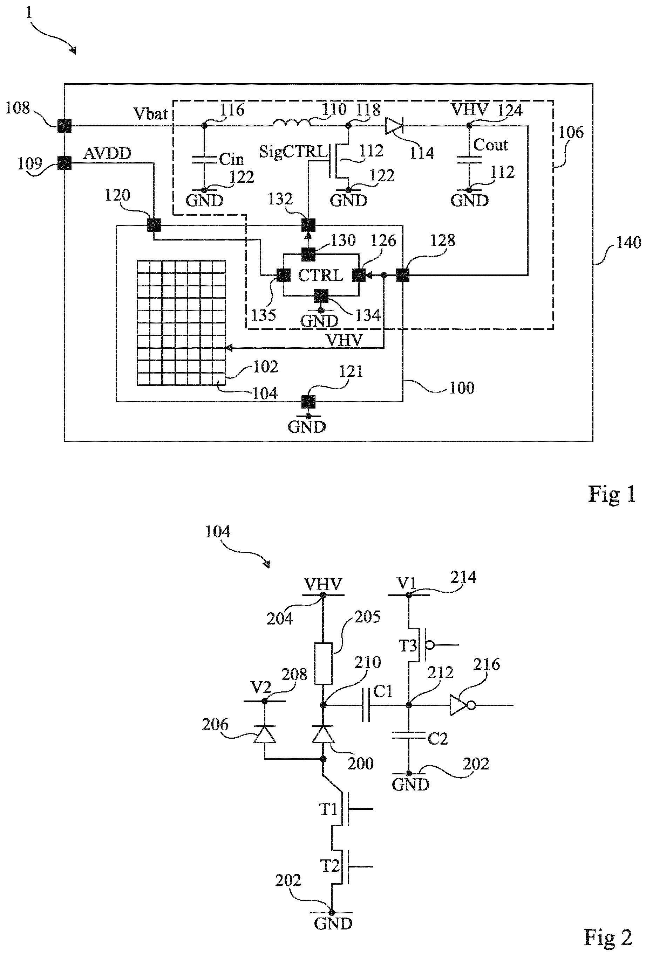

La figure 1 représente, de manière schématique et en partie sous la forme de blocs, un mode de réalisation d'un capteur de lumière 1.

Le capteur de lumière 1 est, par exemple, un capteur de temps de vol apte à produire une carte de profondeur d'une scène capturée par le capteur 1.

Le capteur de lumière 1 comprend une puce de circuit intégré 100. La puce 100 comprend, par exemple, une portion d'une couche semiconductrice, par exemple en silicium, dans et sur laquelle sont formés tous les composants électroniques de la puce 100.

En particulier, la puce de circuit intégré 100 comprend une matrice 102 de pixels 104. En figure 1, à titre d'exemple, la matrice 102 comprend sept colonnes et dix lignes de pixels 104, soit soixante-dix pixels 104, un seul pixel 104 étant référencé en figure 1 pour ne pas la surcharger. La matrice 102 peut cependant comprendre un nombre différent de colonnes et/ou de lignes de pixels 104, et donc un nombre différent, par exemple plus petit ou plus grand, de pixels 104.

Chaque pixel 104 comprend une diode à avalanche à photon unique (non illustrée en figure 1). Dit autrement, chaque pixel 102 comprend une diode configurée pour recevoir un potentiel de polarisation VHV au-dessus de sa tension de claquage, de sorte à pouvoir être placée en mode Geiger. Par exemple, dans chaque pixel, la diode à avalanche à photon unique a sa cathode couplée au potentiel VHV et son anode couplée à un potentiel de référence, par exemple la masse GND. A titre d'exemple, le potentiel VHV, référencé au potentiel de référence GND, a une valeur supérieure à 15 V, de préférence supérieure ou égale à 20 V, par exemple une valeur sensiblement égale à 25 V. A titre d'exemple, chaque pixel 102 comprend une unique diode à avalanche à photon unique. A titre d'exemple alternatif, un pixel peut comprendre plusieurs diodes à avalanche à photon unique, chacune pouvant être associée à son propre circuit d'extinction ("quenching circuit" en anglais) et l'ensemble étant, par exemple, appelé macro-pixel.

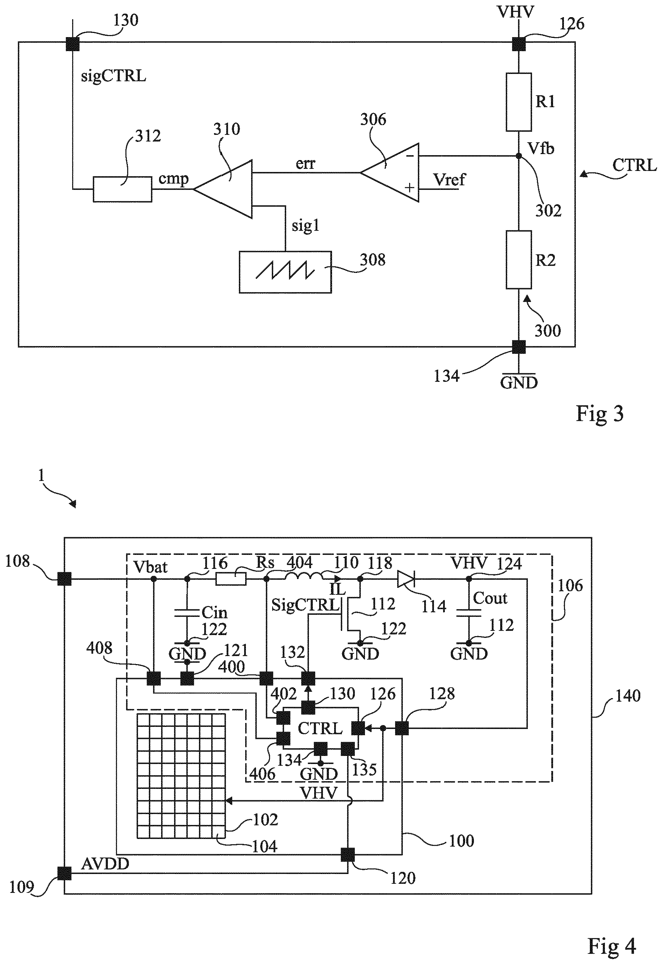

Un exemple d'un pixel 104 pouvant être mis en oeuvre dans la matrice 102 est illustré en figure 2. Cet exemple de pixel 104 est similaire au pixel présenté aux figures 1, 5, 6, 7 et 8 des demandes de brevet EP 3806162, US 2021105427 et CN 112702546. L'exemple de pixel 104 de la figure 3 est, plus particulièrement, similaire au pixel de la figure 5 des demandes de brevet susmentionnées.

Dans cet exemple le pixel 104 comprend une diode à avalanche à photon unique 200. L'anode de la diode 200 est couplée au potentiel GND, c'est-à-dire à un noeud 202 configuré pour recevoir le potentiel GND. La cathode de la diode 200 est couplée au potentiel VHV, c'est-à-dire à un noeud 206 configuré pour recevoir le potentiel VHV.

Plus particulièrement, dans cet exemple, la cathode de la diode 200 est couplée au noeud 204 par une résistance 205. La résistance 205, dite résistance d'extinction, est configurée pour éteindre ("to quench" en anglais), c'est-à-dire stopper, un phénomène d'avalanche dans la diode 200. Dans cet exemple, l'anode de la diode 200 est couplée au noeud 202 par deux transistors MOS ("Métal Oxyde Semiconducteur") T1 et T2. Le transistor T1 est, par exemple, configuré pour éteindre un phénomène d'avalanche dans la diode 200 lorsqu'il est commuté à l'état ouvert. Le transistor T2 est, par exemple, configuré pour désactiver le pixel 104 lorsqu'il est commuté à l'état ouvert.

Dans cet exemple, le pixel 104 comprend en outre une diode 206 de tirage vers le haut ("Pull-up diode" en anglais) dont l'anode est connectée à l'anode de la diode 200 et dont la cathode est connectée à un noeud 208 configuré pour recevoir un potentiel V2. Le potentiel V2 est inférieur au potentiel VHV. Par exemple, le potentiel V2 est de l'ordre de 7 V

Dans cet exemple, le pixel 104 comprend en outre deux capacités C1 et C2. La capacité C1 est connectée entre le noeud 210 de connexion de la diode 200 à la résistance 205, et un noeud 212. La capacité C2 est connecté entre le noeud 212 et le noeud 202. Les capacités C1 et C2 forment un pont diviseur capacitif configuré pour reproduire ou transmettre des variations du potentiel de cathode de la diode 200 sur le noeud 212

Dans cet exemple, le pixel 104 comprend en outre un circuit 216, ici un inverseur, configuré pour commuter sa sortie suite à une variation du potentiel sur le noeud 212 résultant d'un phénomène d'avalanche dans la diode 200. Dit autrement, le circuit 216 est configuré pour détecter un phénomène d'avalanche dans la diode 200.

Dans cet exemple, le pixel 104 comprend en outre un transistor MOS T3 optionnel. Le transistor T3 couple le noeud 212 à un noeud 214 configuré pour recevoir un potentiel V1. Le potentiel V1 est inférieur au potentiel VHV. Le potentiel V1 est, par exemple, un potentiel d'alimentation de l'ordre de 1,2 V. Un potentiel reçu par la grille du transistor T3 permet de modifier la durée des impulsions fournies en sortie du circuit 216.

La personne du métier est en mesure de prévoir des pixels 104 à diode à avalanche à photon unique différents de celui de la figure 2, dans lesquels, comme en figure 2, la diode à avalanche à photon unique reçoit le potentiel VHV, par exemple sur sa cathode, pour pouvoir être placée en mode Geiger. Dit autrement, la personne du métier est en mesure de prévoir des pixels 104 à diode à avalanche à photon unique différents de celui de la figure 2 mais qui nécessitent de recevoir chacun le potentiel VHV pour fonctionner.

En se référant de nouveau à la figure 1, le capteur 1 comprend en outre un convertisseur élévateur à découpage 106 (délimité par des traits en pointillés en figure 1).

Le convertisseur 106 est configuré pour délivrer le potentiel VHV aux diodes à avalanche à photon unique de la matrice 102 de pixels 104. Plus particulièrement, le convertisseur 106 est configuré pour délivrer le potentiel VHV à partir d'un potentiel d'alimentation Vbat. Les potentiels Vbat et VHV sont des potentiels continu (DC de l'anglais "Direct Current" - courant direct). Dit autrement, le convertisseur 106 est un convertisseur continu-continu (DC-DC) .

A titre d'exemple, le potentiel Vbat est inférieur, par exemple d'au moins 10 V, au potentiel VHV. A titre d'exemple, le potentiel Vbat est inférieur ou égal à 5 V, par exemple sensiblement égal à 3,6 V.

Le convertisseur 106 comprend une inductance 110, un interrupteur 112, une diode 114 et un circuit de commande CTRL configuré pour commander des commutations de l'interrupteur 112.

L'inductance 110 couple un noeud 116 configuré pour recevoir le potentiel Vbat à un noeud intermédiaire 118. Dit autrement, une borne de l'inductance 110 est couplée, par exemple connectée, au noeud 116, l'autre borne de l'inductance 110 étant couplée, par exemple connectée, au noeud 118.

L'interrupteur 112 couple le noeud 118 au potentiel de référence GND, c'est-à-dire que l'interrupteur 112 couple le noeud 118 à un noeud 122 configuré pour recevoir le potentiel de référence GND. Cet interrupteur 112 est, par exemple, appelé interrupteur de côté bas ("low side switch" en anglais). Par exemple, l'interrupteur 112 comprend une borne de conduction couplée, par exemple connectée, au noeud 118, et une autre borne de conduction couplée, par exemple connectée, au noeud 122. L'interrupteur 112 reçoit un signal de commande sigCTRL sur une borne de commande.

A titre d'exemple, l'interrupteur 112 est mis en oeuvre par un transistor MOS à canal N. Par exemple, une première borne de conduction, par exemple le drain, du transistor 112, est couplée, de préférence connectée, au noeud 118, une deuxième borne de conduction du transistor 112, par exemple la source, est couplée, de préférence connectée, au noeud 122, et la grille du transistor 112 reçoit le signal sigCTRL. De préférence, lorsque le signal sigCTRL est commuté à un potentiel haut égal à un potentiel d'alimentation de la puce 100 cela est suffisant pour commuter le transistor 112 à l'état passant. Ainsi, l'interrupteur 112 est commandé par un signal, ici une tension, ayant une valeur maximale inférieure ou égale à la valeur de la tension d'alimentation de la puce 100.

La diode 114 couple le noeud intermédiaire 118 à un noeud de sortie 124 du convertisseur 106. Le noeud 124 est configuré pour fournir le potentiel VHV. Dit autrement, le convertisseur 106 fournit le potentiel VHV sur son noeud de sortie 124. La diode 114 a une première électrode, ici son anode, couplée, de préférence connectée, au noeud 118, et une deuxième électrode, ici sa cathode, couplée, de préférence connectée, au noeud 124. En pratique, la diode 114 met en oeuvre une fonction d'interrupteur. Dit autrement, la diode 114 est un interrupteur (non commandable), appelé interrupteur de côté haut ("high side switch" en anglais). A titre d'exemple, la diode 114 est une diode Schottky.

Le circuit CTRL est configuré pour commander l'interrupteur 112, c'est-à-dire des commutations de l'interrupteur 112, de sorte à maintenir le potentiel VHV à une valeur cible Vtarget. La valeur cible Vtarget est, par exemple, supérieure à 15 V, de préférence supérieure ou égale à 20 V, par exemple sensiblement égale à 25 V.

Pour cela, le circuit CTRL est configuré pour recevoir un signal représentatif du potentiel VHV, par exemple le potentiel VHV lui-même. En outre, le circuit CTRL est configuré pour fournir le signal sigCTRL de commande de l'interrupteur 112. A titre d'exemple, le circuit CTRL est configuré pour commander l'interrupteur 112 en modulation de largeur d'impulsion (PWM de l'anglais "Pulse Width Modulation").

Le circuit CTRL fait partie de la puce 100, à la différence de l'inductance 110, de l'interrupteur 112 et de la diode 114 qui sont disposés à l'extérieur de la puce 100, c'est-à-dire qu'ils ne font pas partie de la puce 100. En particulier, le noeud 118 est à l'extérieur de la puce 100.

Ainsi, le circuit CTRL comprend une borne, ou noeud ou entrée, 126 configurée pour recevoir le signal représentatif du potentiel VHV, et, plus particulièrement, le potentiel VHV dans l'exemple de la figure 1. La borne 126 du circuit CTRL est couplée, de préférence connectée, à une borne 128 d'entrée de la puce 100. La borne 128 est configurée pour recevoir le potentiel VHV.

Bien que cela ne soit pas détaillé en figure 1, de préférence, la borne 126 du circuit CTRL correspond, par exemple, à une extrémité d'un pont diviseur de tension, par exemple un pont diviseur de tension résistif, configuré pour diviser la valeur du potentiel VHV de sorte à obtenir un potentiel représentatif du potentiel VHV mais dont la valeur est compatible avec les tensions maximales supportées par les transistors de la puce 100. A titre d'exemple, ce potentiel représentatif du potentiel VHV a une valeur maximale inférieure à celle du potentiel AVDD d'alimentation de la puce 100. Le pont diviseur de tension fait par exemple partie du circuit CTRL, donc de la puce 100.

Plus généralement, en lieu et place du pont diviseur de tension, le circuit CTRL peut comprendre n'importe quel circuit usuel adapté à fournir un potentiel qui soit représentatif du potentiel VHV et qui ait une valeur maximale inférieure à celle de la tension maximale supportée par les transistors MOS de la puce 100.

La borne 128 est en outre couplée, de préférence connectée, à la matrice 102 de pixels 104 de la puce 100, de sorte que le potentiel VHV sur la borne 128 soit fourni à la matrice 102, plus particulièrement à chaque pixel 104 de la matrice 102, et encore plus particulièrement à chaque diode à avalanche à photon unique de la matrice 102. Ainsi, chaque diode à avalanche à photon unique de la matrice 102 reçoit le potentiel VHV, par exemple sur sa cathode comme dans l'exemple de la figure 2. A titre d'exemple, pour un potentiel VHV, c'est-à-dire une valeur cible Vtarget, de l'ordre de 25 V, le courant tiré par la matrice 102 sur le noeud 124 est de l'ordre de 30 mA en fonctionnement stationnaire, et peut atteindre, par exemple, au moins 45 mA lors d'appels de courant transitoires.

En outre, le circuit CTRL comprend une borne, ou noeud ou sortie, 130 configurée pour fournir le signal de commande sigCTRL. La borne 130 est couplée, de préférence connectée, à une borne de sortie 132 de la puce 100. La borne de sortie 132 est configurée pour fournir le signal sigCTRL à l'interrupteur 112 disposé à l'extérieur de la puce 100. La borne 132 est connectée à la borne de commande de l'interrupteur 112.

A titre d'exemple, la puce 100 est alimentée par un potentiel AVDD, la puce 100 comprenant alors une borne 120 configurée pour recevoir le potentiel AVDD, et une borne 121 configurée pour recevoir le potentiel de référence GND. A titre d'exemple, le potentiel AVDD d'alimentation de la puce 100 a une valeur sensiblement égale à 3,6 V.

A titre d'exemple, le circuit CTRL est également alimenté par le potentiel AVDD et comprend alors une borne ou noeud 134 configurée pour recevoir le potentiel de référence GND et une borne 135 configurée pour recevoir le potentiel AVDD. A titre d'exemple, la borne 134 est couplée, de préférence connectée, à la borne d'entrée 121 de la puce 100. A titre d'exemple, la borne 135 est couplée, de préférence connectée, à la borne d'entrée 120 de la puce.

De manière usuelle pour les convertisseurs élévateurs à découpage, le convertisseur 1 comprend une capacité Cout couplant les noeuds 124 et 122 entre eux. Par exemple, la capacité Cout comprend une première électrode couplée, de préférence connectée, au noeud 124 et une deuxième électrode couplée, de préférence connectée, au noeud 122.

A titre d'exemple, le convertisseur 1 comprend en outre une capacité Cin couplant le noeud 116 au noeud 122. Par exemple, la capacité Cin comprend une première électrode couplée, de préférence connectée, au noeud 124 et une deuxième électrode couplée, de préférence connectée, au noeud 122. Cette capacité Cin peut être omise, par exemple lorsque l'impédance entre une source de tension fournissant le potentiel Vbat et le noeud 116 est suffisamment faible pour que les chutes de tension sur le noeud 116 lors d'appels de courant sur le noeud 116 par le convertisseur 106 soient négligeables.

Selon un mode de réalisation, au moins l'inductance 110, l'interrupteur 112 et la diode 114 du convertisseur 306 sont disposés à l'extérieur de la puce 100, et au moins le circuit de commande CTRL du convertisseur 106 fait partie de la puce 100.

Bien que cela ne soit pas illustré, la puce 100 comprend de nombreux transistors MOS, par exemple dans des circuits de commande et des circuits de lecture des pixels 104 de la matrice 102. Ces transistors n'ont pas vocation à mettre en oeuvre des applications de puissance, et ne sont donc pas aptes à supporter de tensions élevées, par exemple la tension appliquée aux bornes de chaque diode à avalanche à photon unique de la matrice 102 pour placer cette diode en mode Geiger. Par exemple, la plupart des transistors MOS de la puce 100 sont configurés pour supporter des tensions inférieures à Vbat. A titre d'exemple, quelques transistors de la puce 100 sont configurés pour tenir des tensions maximales supérieures à Vbat et les autres transistors sont des transistors standard basse tension ("standard low voltage transistors" en anglais), par exemple configurés pour supporter entre leurs bornes des tensions inférieures ou égales à la tension AVDD.

Selon un mode de réalisation, la puce 100 et les composants du convertisseur 106 qui sont externes à la puce 100, à savoir l'inductance 110, l'interrupteur 112, la diode 114, et, lorsqu'elles sont présentes, les capacités Cin et Cout, sont montés sur un support ou substrat 140. Le support 140 fait partie du capteur 1. Selon une variante de réalisation, les capacités Cin et/ou Cout peuvent être disposée à l'extérieur du capteur 1.

A titre d'exemple, le capteur 1, et, plus particulièrement son support 140, comprennent une borne d'entrée 108 configurée pour recevoir le potentiel Vbat. A titre d'exemple, le potentiel Vbat est fourni au capteur 1 par un circuit extérieur au capteur 1.

A titre d'exemple, le capteur 1, et, plus particulièrement son support 140, comprennent une borne d'entrée 109 configurée pour recevoir le potentiel AVDD. A titre d'exemple, le potentiel AVDD est fourni au capteur 1 par un circuit extérieur au capteur 1.

A titre d'exemple alternatif, les potentiels AVDD et Vbat sont confondus, la borne 108 étant alors, par exemple, confondue avec la borne 109.

A titre d'autre exemple alternatif, le capteur 1 ne reçoit de l'extérieur que l'un des potentiels AVDD et Vbat, par exemple le potentiel Vbat, et comprend un circuit configuré pour fournir l'autre des potentiels AVDD et Vbat, par exemple le potentiel AVDD, à partir du potentiel reçu par le capteur 1.

Bien que cela ne soit pas détaillé en figure 1, le support 140 comprend des pistes conductrices, de sorte à mettre en oeuvre les couplages ou les connexions décrits précédemment entre la puce 100, et, plus particulièrement les bornes d'entrée et de sortie de la puce 100, et les composants du convertisseur 106 qui sont disposés à l'extérieur de la puce 100.

Bien que cela ne soit pas illustré en figure 1, lorsque le capteur 1 est un capteur de temps de vol, le capteur 1 peut en outre comprendre une ou plusieurs sources de lumière, par exemple une ou plusieurs diodes laser à cavité verticale émettant par la surface (VCSEL de l'anglais "vertical-cavity surface-emitting laser"), et le ou les circuits de commande rapprochée ("driver" en anglais) de ces sources de lumière. La ou les sources de lumière et le ou les circuits de commande rapprochée sont configurés pour émettre un signal lumineux vers une scène, la matrice 102 étant configuré pour recevoir le signal correspondant réfléchi par la scène. La ou les sources de lumière et le ou les circuits de commande rapprochée sont de préférence des composants discrets montés sur le support 140. D'autres composants discrets du capteur 1 peuvent également être montés sur le support 140. En outre, le capteur 1 comprend, par exemple, un boîtier de protection monté sur, ou assemblé avec, le support 140. Le boîtier comprend une ouverture en vis-à-vis de la matrice 102 de pixels 104 et une ouverture en vis-à-vis de la ou des sources de lumière. Tous les composants et la ou les puces du capteur 1 qui sont montés sur le support 140 sont alors encapsulés dans ce boîtier. Dit autrement, le capteur 1 constitue alors un module prêt à l'emploi ("plug and play" en anglais) qu'il suffit d'alimenter, par exemple en fournissant les potentiels Vbat et AVDD aux bornes 108 et 109 du support 140, pour que le capteur 1 fonctionne. A titre d'exemple, le support 140 est alors configuré pour être assemblé à une carte mère d'un système électronique complexe, tel que par exemple un téléphone intelligent ("smartphone" en anglais), par exemple sur une carte de circuit imprimé (PCB de l'anglais "Printed Circuit Board") ou une carte de circuit imprimé flexible ("Flex PCB" en anglais).

Les composants du convertisseur 106 qui sont disposés à l'extérieur de la puce 100 sont des composants usuels, facilement disponibles.

Plutôt que d'intégrer le circuit CTRL dans la puce 100 du capteur 1, c'est-à-dire dans la puce 100 comprenant les pixels 104 du capteur 1, on aurait pu penser à utiliser un convertisseur élévateur à découpage entièrement disposé à l'extérieur de la puce, sous la forme d'un composant discret qui aurait été monté sur le support 140. Toutefois, cela aurait augmenté la taille du support 140, donc l'encombrement du capteur 1, par exemple lorsque le capteur 1 est un module prêt à l'emploi.

On aurait également pu penser à fournir directement le potentiel VHV au capteur 1 en disposant le convertisseur 106 entièrement à l'extérieur du capteur 1, c'est-à-dire que le convertisseur 106 n'aurait alors pas été monté sur le même support 140 que la puce 100. Toutefois, cela aurait augmenté la distance entre le convertisseur fournissant le potentiel VHV et le capteur 1, ce qui aurait conduit à augmenter les pertes et/ou à augmenter les temps de réponse du convertisseur et/ou à diminuer la finesse de contrôle de la valeur du potentiel VHV.

Par ailleurs, plutôt que de prévoir que le convertisseur 106 du capteur 1 soit disposé pour partie dans la puce 100 et pour partie à l'extérieur de la puce 100, on aurait pu penser utiliser une pompe de charge entièrement intégré dans la puce 100. Toutefois, l'efficacité d'une telle pompe de charges aurait été bien plus faible que celle du convertisseur 106, et, en outre, la surface occupée par la pompe de charge aurait été bien plus important que celle occupée par le circuit CTRL. Par exemple, en considérant une pompe de charge dont l'efficacité est de l'ordre de 25 %, pour fournir en sortie de la pompe de charge un courant maximal de l'ordre de 45 mA pour un potentiel VHV sensiblement égal à 25 V, c'est à dire pour fournir environ 1 W en sortie de la pompe de charge, il aurait fallu que la source d'alimentation fournissant le potentiel Vbat soit capable de délivrer plus de 4 W de puissance d'alimentation, ce qui est une consommation trop élevée par rapport à celle qu'aurait un convertisseur DC-DC à découpage pour fournir la même puissance en sortie. A titre d'exemple, la forte consommation liée à l'utilisation d'une pompe de charge nuit à l'autonomie d'un objet mobile alimenté par batterie.

On aurait pu penser intégrer l'interrupteur 112 dans la puce 100. Toutefois, l'interrupteur 112 voit entre ses bornes des tensions allant jusqu'à la valeur du potentiel VHV, et la puce 100, notamment ses transistors MOS qui auraient pu être envisagés pour mettre en oeuvre l'interrupteur 112, ne sont pas prévus pour supporter de telles tensions.

Par ailleurs, la prévision du circuit CTRL comme faisant partie intégrante de la puce 100 permet un contrôle plus fin de la valeur du potentiel VHV, c'est-à-dire la valeur cible Vtarget, nécessaire au bon fonctionnement des diodes à avalanche à photon unique de la matrice 102, par rapport au cas où ce circuit CTRL aurait été disposé à l'extérieur de la puce 100. Par exemple, le circuit CTRL peut être configuré pour modifier la valeur Vtarget en fonction des conditions de fonctionnement de la puce 100, par exemple en fonction de la température de la puce 100, et donc des diodes à avalanche à photon unique.

De manière plus générale, la mise en oeuvre du convertisseur 106 du capteur 1 telle que décrite en relation avec la figure 1 permet une meilleure efficacité de conversion, une meilleure efficacité de régulation du potentiel VHV avec un encombrement plus faible que si le convertisseur 106 était remplacé par une pompe de charge intégré à la puce 100 ou par un convertisseur élévateur à découpage complètement externe à la puce.

Dans une variante de réalisation non illustrée, l'interrupteur de côté haut du convertisseur 106 est mis en oeuvre par un interrupteur commandable plutôt que par la diode 114 qui correspond à un interrupteur non commandable. L'interrupteur commandable remplaçant la diode 14 est alors commandé par le circuit CTRL. Cet interrupteur commandable de côté haut est, par exemple, un transistor MOS à canal P. Dans ce cas, le signal de commande, typiquement une tension de commande, du transistor PMOS de côté haut a une valeur bien supérieure à ce que les circuits de la puce 100 sont capables de délivrer et/ou de supporter. Le transistor de côté haut est alors fourni avec un circuit de translation de tension ("level-shifter" en anglais) permettant de fournir une tension de commande adaptée au transistor de côté haut à partir d'un signal de commande fourni par le circuit CTRL. Ce circuit de translation de tension et le transistor de côté haut sont alors sous la forme d'un ou plusieurs composants discrets montés sur le support 140.

La mise en oeuvre de l'interrupteur de côté haut du convertisseur 106 avec la diode 114 plutôt qu'avec un transistor MOS est avantageuse en ce qu'elle est moins complexe et moins encombrante.

La figure 3 représente, de manière schématique et en partie sous la forme de blocs, un exemple plus détaillé du circuit CTRL du capteur de la figure 1. Dans cet exemple, le circuit CTRL met en oeuvre une commande PWM de l'interrupteur 112. La borne 135 du circuit CTRL n'est pas représentée en figure 3.

Dans l'exemple de la figure 3, le circuit CTRL comprend un pont diviseur de tension résistif 300, connecté entre les entrées, ou bornes, 126 et 134 du circuit CTRL. Le pont diviseur de tension 300 est configuré pour diviser la valeur du potentiel VHV et fournir cette valeur divisée Vfb sur un noeud 302. Dit autrement, le pont diviseur 300 reçoit le potentiel VHV et fournit le potentiel Vfb à partir du potentiel VHV, le potentiel Vfb étant représentatif du potentiel VHV et étant inférieur au potentiel VHV. De préférence, la tension Vfb est inférieure à la tension maximale que peuvent supporter les composants, notamment les transistors, de la puce 100. Par exemple, la tension Vfb est inférieure à la tension Vbat, de préférence inférieure à la tension AVDD.

A titre d'exemple, le pont diviseur de tension 300 comprend une résistance R1 connectée entre les noeuds 126 et 302, et une résistance R2 connectée entre les noeuds 302 et 134.

Le circuit CTRL comprend un circuit 306. Le circuit 306 est configuré pour fournir un signal err représentatif de l'écart de valeur, c'est à dire de l'erreur, entre la tension Vfb et une tension Vref. La valeur de tension Vref est déterminée par la valeur Vtarget. Ainsi, le signal err est représentatif de l'écart de valeur, ou erreur, entre le potentiel VHV et sa valeur cible. Le circuit 306 est configuré pour recevoir le signal Vfb, le signal Vref et pour fournir le signal err. A titre d'exemple, le circuit 306 met en oeuvre une fonction de filtrage proportionnel intégral dérivée (PID). A titre d'exemple, le circuit 306 comprend un amplificateur opérationnel monté en amplificateur d'erreur, les composants passifs usuels de cet amplificateur d'erreur n'étant pas représentés en figure 3 pour ne pas surcharger la figure. A titre d'exemple, le signal Vref est reçu par une entrée du circuit 306, par exemple l'entrée non inverseuse (+) de l'amplificateur opérationnel, le signal Vfb est reçu par une autre entrée du circuit 306, par exemple l'entrée inverseuse (-) de l'amplificateur opérationnel, et le signal err est disponible en sortie du circuit 306, par exemple en sortie de l'amplificateur opérationnel.

Le circuit CTRL comprend en outre un circuit 308. Le circuit 308 est configuré pour fournir un signal périodique en dent de scie sig1. La fréquence du signal sig1 correspond, dans cet exemple, à la fréquence de commutation de l'interrupteur 112 (voir figure 1), et est, par exemple, de l'ordre de 10 MHz.

Le circuit CTRL comprend en outre un circuit 310 configuré pour comparer le signal sig1 avec le signal err, et pour fournir un signal binaire cmp dont l'état binaire indique le résultat de cette comparaison. Par exemple, le signal cmp est dans un premier état binaire lorsque le signal err est inférieur au signal sig1, et à dans un deuxième état binaire lorsque le signal err est supérieur au signal sig1. Ainsi, la largeur chaque impulsion du signal cmp est modulée en fonction de la valeur du potentiel VHV.

Le circuit CTRL peut comprendre, comme cela est illustré en figure 3, un circuit 312 configuré pour fournir le signal sigCTRL à partir du signal cmp. Le circuit 312 est configuré pour mettre en forme le signal cmp pour générer le signal sigCTRL. A titre d'exemple le circuit 312 est un circuit tampon ("buffer circuit" en anglais). A titre d'exemple, chaque commutation du signal cmp provoque une commutation correspondante du signal sigCTRL, et chaque commutation du signal sigCTRL est provoquée par une commutation correspondante du signal cmp.

Selon un autre exemple non illustré, le circuit 312 peut être omis.

Bien que l'on ait décrit ci-dessus, notamment en relation avec la figure 3, un cas où le circuit CTRL est configuré pour commander l'interrupteur 112 (figure 1) en PWM, la présente description ne se limite pas à cet exemple de commande. En effet, à titre d'exemple alternatif, le circuit CTRL peut mettre en oeuvre une commande en modulation de fréquence d'impulsion (PFM de l'anglais "Pulse Frequency Modulation"), ou une commande de type à hystérésis. Dans encore un autre exemple, le circuit CTRL peut être configuré pour commuter entre au moins deux modes de commande de l'interrupteur 112, par exemple entre une commande PWM et une commande PFM, ces commutations entre ces modes de commande différents étant, par exemple, déterminées par la puissance tirée par la puce 100 sur le noeud 124 (voir figure 1).

A titre d'exemple, dans des modes de réalisation, le circuit CTRL peut avoir besoin de connaître le courant dans l'inductance, par exemple de savoir si le courant est nul ou non, pour générer le signal sigCTRL.

Dans ce cas, le convertisseur 106 peut comprendre un circuit configuré pour déterminer le courant dans l'inductance 110, par exemple un circuit configuré pour détecter lorsque le courant dans l'inductance 110 s'annule.

La figure 4 représente, de manière schématique et au moins en partie sous la forme de blocs, une variante de réalisation du capteur 1 de la figure 1. Seules les différences entre le convertisseur 1 de la figure 1 et celui de la figure 4 sont ici mises en exergue.

Dans cette variante, le circuit CTRL est configuré pour générer le signal sigCTRL non seulement à partir de la valeur du potentiel VHV, c'est-à-dire de l'écart de valeur entre le potentiel VHV effectivement disponible sur le noeud 124 et la valeur Vtarget visée du potentiel VHV, mais, en outre, à partir de la valeur du courant IL dans l'inductance 110, par exemple à partir d'une détection que le courant IL dans l'inductance s'annule.

Ainsi, par rapport au convertisseur 106 de la figure 1, le convertisseur 106 de la figure 4 comprend une résistance Rs, par exemple appelée résistance de mesure ("shunt resistor" en anglais).

Cette résistance Rs est connectée en série avec l'inductance 110, entre les noeuds 118 et 116.

Par exemple, en figure 4, la résistance Rs a une extrémité, ou borne, connectée au noeud 116, une autre extrémité, ou borne, connectée à une électrode de l'inductance 110, l'autre électrode de l'inductance 110 étant connectée au noeud 118. A titre d'exemple alternatif non illustré, la résistance Rs a une extrémité, ou borne, connectée au noeud 118, une autre extrémité, ou borne, connectée à une électrode de l'inductance 110, l'autre électrode de l'inductance 110 étant connectée au noeud 116.

De préférence, la résistance Rs est connectée du côté du noeud 116, de sorte que la tension sur chaque borne de la résistance Rs reste inférieure ou égale à une valeur de tension maximale que les transistors de la puce 100 peuvent supporter.

La résistance Rs est, comme les éléments 110, 112 et 114, et, lorsqu'elles sont présentes, les capacités Cin et Cout, disposée à l'extérieur de la puce 100.

Le circuit CTRL comprend deux bornes, ou noeuds ou entrées, 402 et 406 configurées chacun pour recevoir la tension sur l'une des bornes de la résistance Rs. Ainsi, la puce 100 comprend deux bornes, ou entrées, 400 et 408 connectées chacune à une extrémité ou borne différente de la résistance Rs, et au circuit de commande.

Dans l'exemple de la figure 4, la borne 408 de la puce 100 est connectée à une première extrémité de la résistance Rs, à savoir, dans cet exemple, le noeud 116, et la borne 400 de la puce 100 est connectée à une deuxième extrémité de la résistance Rs, à savoir, dans cet exemple, un noeud 404 de connexion entre l'inductance 110 et la résistance Rs. En outre, la borne 408 de la puce 100 est connectée à la borne 406 du circuit CTRL et la borne 400 de la puce 100 est connectée à la borne 402 du circuit CTRL.

La personne du métier est en mesure d'adapter la description faite ci-dessus en relation avec la figure 4 au cas où les potentiels AVDD et Vbat sont confondus et/ou au cas où la résistance Rs a une borne connectée au noeud 118.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la personne du métier est en mesure de prévoir d'autres modes de réalisation d'un convertisseur élévateur à découpage dont l'interrupteur de côté bas, l'interrupteur de côté de haut, de préférence une diode, et l'inductance sont disposés en dehors d'une puce de circuits intégrés comprenant une matrice de pixels comportant chacun une diode à avalanche à photon unique, et dont le circuit de commande de l'interrupteur de côté bas, ou dit autrement, la boucle de contre réaction en tension et/ou en courant du convertisseur, fait partie intégrante de cette puce. Dans ce cas, selon un mode de réalisation, les interrupteurs de côté haut et de côté bas du convertisseur, c'est-à-dire les interrupteurs de hachage du convertisseur, l'inductance, et la résistance de mesure lorsqu'elle est présente, sont montés sur le même support que la puce, par exemple lorsque le capteur forme un module prêt à l'emploi.

Enfin, la mise en oeuvre pratique des modes de réalisation et variantes décrits est à la portée de la personne du métier à partir des indications fonctionnelles données ci-dessus.

## Revendications

1. Capteur de lumière (1) comprenant une puce de circuit intégré (100) et un convertisseur DC-DC élévateur (106), dans lequel :
la puce de circuit intégré (100) comprend une matrice de pixels (102, 104), chaque pixel (104) comportant au moins une diode à avalanche à photon unique (200) ;
le convertisseur (106) est configuré pour délivrer un potentiel de polarisation (VHV) aux diodes (200) des pixels (102), le potentiel de polarisation (VHV) étant apte à placer lesdites diodes en mode Geiger ;
le convertisseur (106) comprend :
- une inductance (110) couplant un noeud (116) configuré pour recevoir un premier potentiel d'alimentation (Vbat) à un noeud intermédiaire (118) ;
- un premier interrupteur (112) couplant le noeud intermédiaire (118) à un potentiel de référence (GND) ;
- un deuxième interrupteur (114) couplant le noeud intermédiaire (118) à un noeud de sortie (124) du convertisseur, le noeud de sortie (124) étant configuré pour délivrer ledit potentiel de polarisation (VHV) ; et
- un circuit de commande (CTRL) configuré pour commander des commutations du premier interrupteur (112),
l'inductance (110), le premier interrupteur (112) et le deuxième interrupteur (114) du convertisseur étant disposés à l'extérieur de la puce de circuit intégré (100) et le circuit de commande (CTRL) appartenant à ladite puce de circuit intégré (100).

2. Capteur de lumière selon la revendication 1, dans lequel le deuxième interrupteur (114) est une diode.

3. Capteur de lumière selon la revendication 1 ou 2, dans lequel le convertisseur (106) comprend en outre une première capacité (Cout) couplant le noeud de sortie (124) au potentiel de référence (GND), la première capacité étant disposée à l'extérieur de la puce de circuit intégré (100).

4. Capteur de lumière selon l'une quelconque des revendications 1 à 3, dans lequel le noeud de sortie (124) du convertisseur (106) est connecté à une borne d'entrée (128) de la puce de circuit intégré (100).

5. Capteur de lumière selon la revendication 4, dans lequel la borne d'entrée (128) de la puce de circuit intégré (100) est couplée, de préférence connectée, à une entrée (126) du circuit de commande (CTRL).

6. Capteur de lumière selon la revendication 4 ou 5, dans lequel la borne d'entrée (128) de la puce (100) est couplée à la matrice de pixels (102, 104) de sorte qu'un potentiel (VHV) sur la borne d'entrée (128) soit fourni à chaque diode à avalanche à photon unique (200) de la matrice de pixels (102, 104) de la puce de circuit intégré (100).

7. Capteur de lumière selon l'une quelconque des revendications 1 à 6, dans lequel le potentiel de polarisation (VHV) a une valeur cible supérieure à 15 V, de préférence supérieure ou égale à 20 V.

8. Capteur de lumière selon l'une quelconque des revendications 1 à 7, configuré pour mettre en oeuvre une fonction de capture de temps de vol.

9. Capteur de lumière selon l'une quelconque des revendications 1 à 8, dans lequel une borne de commande du premier interrupteur (112) du convertisseur (106) est connectée à une borne de sortie (132) de la puce de circuit intégré (100).

10. Capteur de lumière selon la revendication 9, dans lequel une sortie (130) du circuit de commande (CTRL) est couplée, de préférence connectée, à la borne de sortie (132) de la puce de circuit intégré (100).

11. Capteur de lumière selon l'une quelconque des revendications 1 à 10, dans lequel le convertisseur (106) comprend en outre une deuxième capacité (Cin) couplant le noeud (116) configuré pour recevoir le premier potentiel d'alimentation (Vbat) au potentiel de référence (GND), la deuxième capacité (Cin) étant disposée à l'extérieur de la puce de circuit intégré (100).

12. Capteur de lumière selon l'une quelconque des revendications 1 à 11, dans lequel la puce de circuit intégré (100) comprend une borne (121) configurée pour recevoir le potentiel de référence (GND).

13. Capteur de lumière selon l'une quelconque des revendications 1 à 12, dans lequel le convertisseur (106) comprend en outre une résistance (Rs) connectée en série avec l'inductance (110), entre le noeud (116) configuré pour recevoir le premier potentiel d'alimentation (Vbat) et le noeud intermédiaire (118), la résistance (Rs) étant disposée à l'extérieur de la puce de circuit intégré (100) et la puce (100) comprenant deux bornes (408, 400) connectées chacune à une extrémité différente de la résistance (Rs) et au circuit de commande (CTRL, 402, 406).

14. Capteur de lumière selon l'une quelconque des revendications 1 à 13, comprenant un substrat (140) sur lequel sont montés la puce de circuit intégré (100) et des composants (110, 112, 114, Rs, Cin, Cout) du convertisseur (106) qui sont disposés à l'extérieur de la puce de circuit intégré (100), le support (140) comprenant des pistes conductrices configurées pour connecter entre eux la puce (100) et les composants (110, 112, 114, Rs, Cin, Cout) du convertisseur (106) qui sont disposés à l'extérieur de la puce de circuit intégré (100).

15. Capteur de lumière (1) selon la revendication 14, dans lequel le capteur comprend en outre :
- un boîtier de protection monté sur le support ; et
- au moins une source de lumière montée sur le support (140),
la puce (100), l'inductance (110) du convertisseur, les premier et deuxième interrupteurs (114, 112) du convertisseur et ladite au moins une source de lumière étant encapsulés dans ledit boîtier, et le capteur formant un module prêt à l'emploi.
